# EUROPÄISCHE PATENTANMELDUNG

(11) **EP 3 910 122 A1**
(43) Veröffentlichungstag der Anmeldung: **17.11.2021**
(21) Anmeldenummer: 21000125.1
(22) Anmeldetag: 05.05.2021
(51) Int. Cl.: E04B 1/26

(54) **VERBINDUNG ZWEIER BAUTEILE**

(30) Priorität: 13.05.2020 AT 1142020
(71) Anmelder: SIHGA GmbH, 4694 Ohlsdorf (AT)
(72) Erfinder: Kaiser-Mühlecker, Benedikt, 4531 Kematen an der Krems (AT); Gruber, Johann, 4842 Zell am Pettenfirst (AT); Schauer, Robert, 4655 Vorchdorf (AT)

(57) **Zusammenfassung**

Die Erfindung betrifft eine Verbindung zweier Bauteile (3, 5) an zwei einander zugewandt liegenden vertikalen Verbindungsflächen (6, 10), wobei sich zwischen den Verbindungsflächen (6, 10) ein plattenartiger Beschlagteil (1, 2) und ein bolzenartige Beschlagteil (4) erstreckt, welche jeweils starr an jeweils einer der Verbindungsflächen (6, 10) verankert sind, wobei der bolzenartige Beschlagteil (4) in eine Öffnung (9) am plattenartigen Beschlagteil (1, 2) hinein ragt und dort an einem hinterschnittenen Flächenbereich gegen Bewegung aus der Öffnung heraus blockiert ist, wobei die Querschnittsfläche der Öffnung (9) zu einem Randbereich (12) des plattenartigen Beschlagteils (1, 2) hin offen ist und der bolzenartige Beschlagteil (4) an einem obersten oder an einem untersten Randbereich der Öffnung (9) anliegt.

Der Randbereich (12) des plattenartigen Beschlagteils (1, 2), zu welchem hin die Querschnittsfläche der Öffnung (9) offen ist, ist ein seitlicher Randbereich des plattenartigen Beschlagteils (1, 2) und kein oberer oder unterer Randbereich.

## Beschreibung

Die Erfindung betrifft eine Verbindung zweier Bauteile an zwei einander zugewandt liegenden vertikalen Verbindungsflächen.
Typischerweise wird die Verbindung im Bauwesen angewandt, um eine Stirnfläche eines horizontal ausgerichteten, aus Holz bestehenden Trägers, an einer zu der Stirnfläche parallel ausgerichteten Verbindungsfläche eines anderen Bauteils zu verankern.

Die gattungsgemäße Bauweise wird beispielhaft anhand der EP 866186 B1 erklärt. Die Verbindungsflächen der beiden zu verbindenden Bauteile liegen vertikal, zueinander parallel und einander zugewandt. Ein Verbindungsbeschlag, welcher zumindest einen plattenartig flächigen und einen bolzenartigen Beschlagteil umfasst, erstreckt sich zwischen den beiden Verbindungsflächen. Der plattenartige Beschlagteil ist mit dem einen Bauteil starr verbunden. Er weist eine zum zweiten Bauteil hin offene Öffnung auf, in welche der bolzenartigen Beschlagteil, welcher mit dem zweiten Bauteil starr verbunden ist und sich von dessen Verbindungsfläche aus in Richtung auf den ersten Bauteil hin erstreckt, hineinragt, und dort mit einem verbreiterten Kopf an Hinterschneidungsflächen der Öffnung gegen Bewegung aus der Öffnung heraus blockiert ist.
Die Querschnittsfläche der Öffnung im plattenartigen Beschlagteil ist länglich, wobei die Längsrichtung vertikal ausgerichtet ist, und wobei die Umfassung der Querschnittsfläche zum oberen Rand des plattenartigen Beschlagteils hin offen ist. Bei der Montage ist der plattenartige Beschlagteil am ortsfesten ersten Bauteil verankert. Der zweite, noch bewegliche Bauteil, an welchem der bolzenartige Beschlagteil verankert ist, wird von oben her am ersten Bauteil entlang abgesenkt, sodass der bolzenartige Bauteil von oben her parallel zu deren Querschnittsfläche in die Öffnung am ersten Beschlagteil eingeschoben wird und letztendlich zum Stillstand kommt, wenn er am untersten Randbereich der Öffnung anliegt. Mit den gleichen Beschlagteilen ist ohne Nachteile auch die komplementäre Montageweise verwirklichbar, bei welcher der plattenartige Beschlagteil am beweglichen Bauteil mit nach unten hin offener Querschnittsflächenseite seiner Öffnung montiert ist, und der bolzenartige Beschlagteil am ortsfesten Bauteil, und sich nach erfolgter Montage der bolzenartige Beschlagteil am obersten Querschnittsbereich der Öffnung befindet.
Bei bekannten Anwendungen des besprochenen Prinzips ist oftmals ein einzelner plattenartiger Beschlagteil mit einer Mehrzahl von bolzenartigen Beschlagteilen kombiniert. Oftmals sind dabei die bolzenartigen Beschlagteile nur durch jeweils eine Schraube realisiert, welche in den zweiten Bauteil soweit eingeschraubt ist, dass ihr gegenüber dem Gewindeteil etwas verbreiterter Schraubenkopf noch etwas von dem zweiten Bauteil vorsteht.
Es ist üblich, dann, wenn ein Bauteil ein horizontal verlaufender angeordneter Träger aus Holz ist und eine Stirnseite davon Verbindungsfläche ist, die benötigten Schrauben gegenüber der Längsrichtung des Trägers schräg geneigt auszurichten.

Vor allem bei der Anwendung zum Verbinden der Stirnseite eines horizontal verlaufenden Trägers liegt ein Nachteil der beschriebenen Bauweisen darin, dass die jeweiligen Beschläge entweder nur für eine genau bestimmte Querschnittshöhe des Trägers gut passen, oder, dass für eine einzige Bauteilverbindung eine Mehrzahl von relativ kleinen Beschlägen verwendet werden muss, welche an den Verbindungsflächen in Abständen übereinander montiert werden müssen. Das führt zu Verlust an wirksamer Verbindungsfläche und zu schwer erfüllbaren Genauigkeitsanforderungen beim Positionieren der Beschläge und oft auch zu schwierig durchführbaren Manövern bei der Trägermontage.

Die der Erfindung zu Grunde liegende Aufgabe besteht darin, die beschriebene Bauweise dahingehend zu verbessern, dass sie besser an unterschiedlich hohe Verbindungsflächen anzupassen ist und dabei dennoch einfache und sichere Montage zulässt.

Zum Lösen der Aufgabe wird von der bekannten Merkmalskombination ausgegangen, dass der zwischen den zueinander parallel und vertikal ausgerichteten Verbindungsflächen anzuordnende Beschlag einen plattenartigen Beschlagteil und einen bolzenartigen Beschlagteil umfasst, welche jeweils starr an der jeweiligen Verbindungsfläche von jeweils einem der zu verbindenden Bauteile verankert sind, wobei der bolzenartige Beschlagteil in eine Öffnung am plattenartigen Beschlagteil hinein ragt und dort an einem hinterschnittenen Flächenbereich gegen Bewegung aus der Öffnung heraus blockiert ist, wobei die Querschnittsfläche der Öffnung zu einem Rand des plattenartigen Beschlagteils hin offen ist und der bolzenartige Beschlagteil an dem obersten oder an dem untersten Randbereich der Öffnung anliegt.

Als erfindungsgemäße Verbesserung wird vorgeschlagen, als Randbereich des plattenartigen Beschlagteils, zu welchem hin die Querschnittsfläche der Öffnung offen ist, einen seitlichen Randbereich des plattenartigen Beschlagteils vorzusehen (und nicht einen oberen oder unteren Randbereich).

Durch diese einfach realisierbare Maßnahme wird als wesentlichster Vorteil erreichbar, dass mehrere plattenartige Beschlagteile in vertikaler Richtung direkt aneinander anliegend an einer Verbindungsfläche montiert werden können, was sehr platzeffizient ist und das exakte Ausrichten der Beschlagteile sehr erleichtert. Dennoch ist beim Zusammenfügen der zu verbindenden Bauteile nur eine einfache Relativbewegung der Teile zueinander - parallel zu den zu verbindenden Flächen - erforderlich, wobei durch die Schwerkraft unterstützt wird, dass die Bauteile relativ zueinander genau in die richtige Endlage kommen und in dieser stabil verharren.

Die Erfindung wird einschließlich vorteilhafter Weiterentwicklungen an Hand von Zeichnungen zu beispielhaften Ausführungsformen näher erläutert:
- Fig. 1:: zeigt in zwei Frontalansichten und einer seitlichen Schnittansicht einen ersten beispielhaften erfindungsgemäßen plattenartigen Beschlagteil.
- Fig. 2:: zeigt zwei plattenartige Beschlagteile von Fig. 1 in Schnittansicht in eingebautem Zustand.
- Fig. 3:: zeigt einen zweiten beispielhaften erfindungsgemäßen plattenartigen Beschlagteil in Schrägrissansicht.

Bei den Zeichnungen und der nun folgenden Beschreibung wird beispielhaft davon ausgegangen, dass der plattenartige Beschlagteil 1, 2 an einem am Untergrund abgestützten (ortsfesten) ersten Bauteil 3, wie typischerweise einer Wand oder einer Säule, befestigt ist, und dass der bolzenartige Beschlagteil 4 am zweiten Bauteil 5, typischerweise einem horizontal verlaufenden Träger aus Holz, befestigt ist, welcher vor der Verbindung mit dem ersten Bauteil 3 noch bewegbar ist.

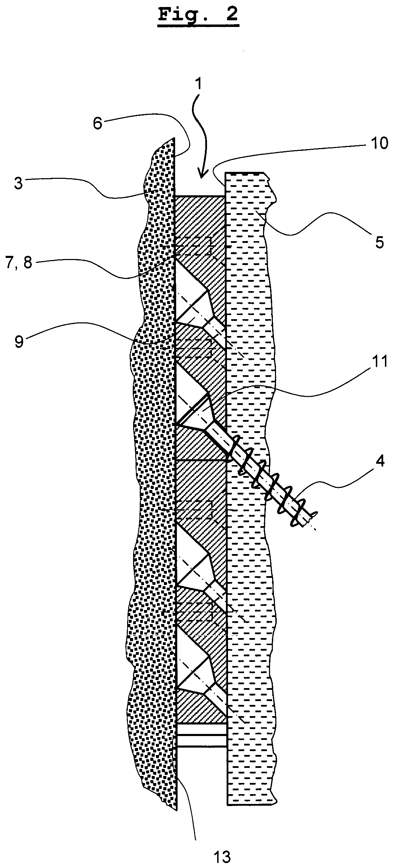

Die bolzenartigen Beschlagteile 4 sind in den gezeigten Beispielen Schrauben. Mit einer Ausnahme in Fig. 2 sind sie in den Zeichnungen nicht explizit dargestellt, sondern nur durch jeweils eine strichpunktierte Linie symbolisiert.

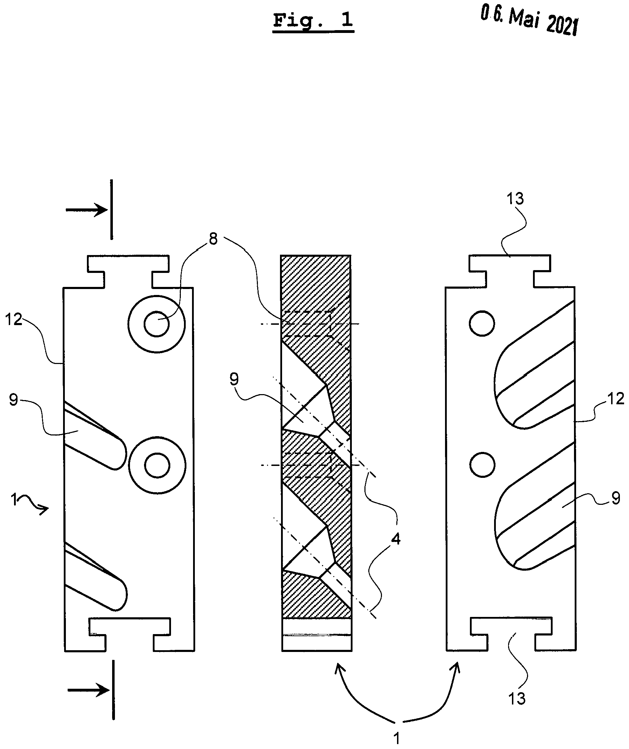

In montiertem Zustand liegt der plattenartige Beschlagteil 1 gemäß Fig. 1 und Fig. 2 mit der in Fig. 1 in der rechten Abbildung sichtbaren Fläche flächig auf der Verbindungsfläche 6 des ersten Bauteils 3 auf und ist an dieser durch Schrauben 7 (durch eine strichpunktierte Linie symbolisiert), welche durch Schraubendurchgangsbohrungen 8 in ihm hindurch verlaufen und im Bauteil 3 in Gewindeeingriff sind, gehalten.

Am zweiten Bauteil 5 sind bolzenartige Beschlagteile 4 derart montiert, dass sie mit einem Längsbereich von der Verbindungsfläche 10 am zweiten Bauteil hervorragen. An dem hervor ragenden Längsbereich gibt es einen Kopfabschnitt 11, in welchem der Durchmesser des bolzenartigen Teils mit steigendem Abstand zur Verbindungsfläche 10 verbreitert ist.
Typischerweise - aber nicht zwangsläufig - ist ein bolzenartiger Beschlagteil 4 durch eine Holzschraube gebildet, deren Schraubenkopf wie üblich gegenüber dem Schaft, an welchem sich das Schraubengewinde befindet, vergrößerten Durchmesser aufweist.

Wie in Fig. 2 gut erkennbar ist, ragt in Öffnungen 9 am plattenartigen Beschlagteil jeweils ein bolzenartiger Beschlagteile 4 hinein, und ist dort an einem hinterschnittenen Flächenbereich mit seinem Kopfabschnitt 11 ähnlich einer Verhakung gegen Bewegung aus der Öffnung heraus blockiert.
Ein "hinterschnittener Flächenbereich" in diesem Sinne ist ein Randflächenbereich einer Öffnung, an welchem die Breite der Öffnung mit steigender Tiefe der Öffnung zunimmt. Am gezeigten Beispiel liegt der Ausgang der Öffnung 9 an der Verbindungsfläche 10 des zweiten Bauteils 5 und mit "Tiefe der Öffnung 9" ist der Abstand zu diesem Ausgang gemeint.

Wie an den beiden äußeren Darstellungen in Fig. 1 gut erkennbar ist, ist die Querschnittsfläche jeder der Öffnungen 9 zu einem Randbereich 12 des plattenartigen Beschlagteils 1 hin offen, sodass jede Öffnung einen Schlitz bildet, welcher sich von dem Randbereich 12 des plattenartigen Beschlagteils aus in die Fläche des plattenartigen Beschlagteils hinein erstreckt. Wie bei Bauweisen gemäß dem Stand der Technik werden zur Montage von erstem und zweitem Bauteil 3, 5 (siehe Fig. 2) aneinander erst die Beschlagteile 1, 4 an den jeweiligen Bauteilen 3, 5 befestigt und dann die Bauteile 3, 5 samt Beschlagteilen 1, 4 parallel zu den Verbindungsflächen 6, 10 relativ zueinander so bewegt, dass die vorstehenden Längsbereiche der bolzenartigen Beschlagteile 4 vom Randbereich 12 des plattenartigen Beschlagteils 1 her in die jeweilige Öffnung 9 hineingleiten.

Von erfindungsgemäß wesentlicher Bedeutung ist, dass jener Randbereich 12, zu welchen hin die Querschnittsfläche der Öffnungen 9 offen ist, ein seitlicher Rand des plattenartigen Beschlagteils 1 ist, und nicht ein oberer oder unterer Rand.
Wie schon weiter oben erwähnt wird damit erreicht, dass mehrere plattenartige Beschlagteile 1 direkt aneinander anliegend vertikal übereinander angeordnet werden können - wie es in Fig. 2 dargestellt ist. Damit ist einfach erreichbar, dass mehrere plattenartigen Beschlagteile zueinander eine genau definierte Lage haben, dass eine große Anzahl von Verbindungsstellen zwischen plattenartigen Beschlagteilen 1 und bolzenartigen Beschlagteilen 4 Platz findet, und, dass dennoch beim Montagevorgang der Bauteile 3, 5 aneinander nur eine einfache Relativbewegung der Bauteile 3, 5 parallel zu den Verbindungsflächen 6, 10 zueinander erforderlich ist.

In der dargestellten bevorzugten Ausführung sind der obere und der untere Randbereich der plattenartigen Beschlagteile 1 als zueinander komplementäre Teile 13 einer Steckverbindung ausgebildet.

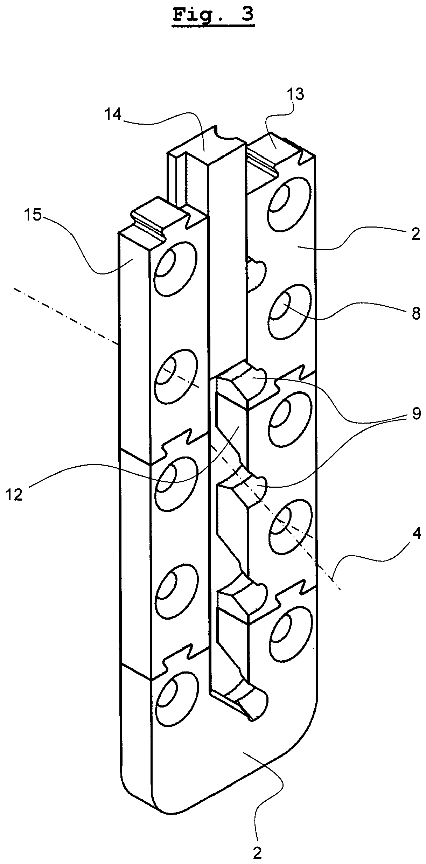

Fig. 3 zeigt eine vorteilhafte Weiterentwicklung eines erfindungsgemäß verwendbaren plattenartigen Beschlagteils 2.
Der plattenartige Beschlagteil 2 gemäß Fig. 3 weist wie der zuvor besprochene plattenartige Beschlagteil 1 von Fig. 1 und Fig. 2 Schraubendurchgangsbohrungen 8, Öffnungen 9, deren Querschnittsfläche zu einem seitlichen Randbereich 12 hin offen ist, und zueinander komplementäre Teile 13 einer Steckverbindung am oberen und am unteren Randbereich auf. Die Funktionsweise dieser Teile ist genau gleich wie an Hand der Bauweise von Fig. 1 und Fig. 2 beschriebenen. Als bolzenartige Beschlagteile 4 können genau jene Teile verwendet werden wie anhand von Fig. 2 beschrieben.
Eine besondere Zusatzfunktion bei der Bauweise gemäß Fig. 3 wird durch einen sogenannten Blockierteil 14 ausgeübt. Dieser Blockierteil 14 ist nach dem Zusammenfügen von plattenartigen Beschlagteilen 2 mit den bolzenartigen Beschlagteilen 4 an jenem seitlichen Randbereich 12 des plattenartigen Beschlagteils 2 positionierbar und dort fixierbar, zu welchem hin die Querschnittsfläche der Öffnungen 9 hin offen ist. Durch den Blockierteil 14 werden damit die seitlichen Randbereiche der Öffnungen 9 verschlossen, womit das ungewollte Herausgleiten der bolzenartigen Beschlagteile 4 aus den Öffnungen 9 zuverlässig vermeidbar ist.

(Das besagte Herausgleiten könnte beispielsweise dann eine Gefahr sein, wenn unter einem erfindungsgemäß ohne Blockierteil 14 montierten, horizontal verlaufenden Träger eine Unterstützungssäule eingespreizt wird und diese zu hoch bemessen ist, sodass sie den Träger anhebt, wodurch die bolzenartigen Beschlagteile 4 aus den Öffnungen 9 herausgleiten würden und mit dem Entfernen der Unterstützungssäule der Träger abstürzen könnte.)

Am Beispiel gemäß Fig. 3 wird mittels Zusatzteilen 15, in einem Abstand zu jenem Randbereich 12 der plattenartigen Beschlagteile 2, an dem zu befestigenden Bauteil 3 befestigt werden, eine Nut zwischen den plattenartigen Beschlagteilen 2 und den Zusatzteilen 15 eingegrenzt, in welche Blockierteile 14 nach dem Zusammenfügen der Verbindung zwischen den Bauteilen 3, 5 eingeschoben werden können.
Gemäß der Ausführung von Fig. 3 sind auch die Zusatzteile 15 durch Steckverbindungen untereinander und mit den plattenartigen Beschlagteilen 2 verbindbar, womit Aufwand für das richtige Positionieren eingespart wird.

Im Rahmen üblichen Handelns fachlich versierter Personen sind auch andere Möglichkeiten des notwendigen Fixierens von Blockierteilen am Randbereich 12 möglich. Beispielsweise kann nach der Montage der Bauteile 3, 5 aneinander ein biegesteifer Rechteckprofilstab neben einer Reihe von plattenartigen Beschlagteilen 1, 2 im Spalt zwischen den Bauteilen 3, 5 durchgesteckt werden und an Längsbereichen die zugänglich sind, wie auch immer, mit zumindest einem der beiden Bauteile 3, 5 starr verbunden werden.

## Patentansprüche

1. Verbindung zweier Bauteile (3, 5) an zwei einander zugewandt liegenden vertikalen Verbindungsflächen (6, 10), wobei sich zwischen den Verbindungsflächen (6, 10) ein plattenartiger Beschlagteil (1, 2) und ein bolzenartige Beschlagteil (4) erstreckt, welche jeweils starr an jeweils einer der Verbindungsflächen (6, 10) verankert sind, wobei der bolzenartige Beschlagteil (4) in eine Öffnung (9) am plattenartigen Beschlagteil (1, 2) hinein ragt und dort an einem hinterschnittenen Flächenbereich gegen Bewegung aus der Öffnung heraus blockiert ist, wobei die Querschnittsfläche der Öffnung (9) zu einem Randbereich (12) des plattenartigen Beschlagteils (1, 2) hin offen ist und der bolzenartige Beschlagteil (4) an einem obersten oder an einem untersten Randbereich der Öffnung (9) anliegt,
**dadurch gekennzeichnet, dass**
der Randbereich (12) des plattenartigen Beschlagteils (1, 2), zu welchem hin die Querschnittsfläche der Öffnung (9) offen ist, ein seitlicher Randbereich des plattenartigen Beschlagteils (1, 2) ist.

2. Verbindung nach Anspruch 1, **dadurch gekennzeichnet, dass** mehrere plattenartige Beschlagteile (1, 2) direkt aneinander anliegend vertikal übereinander angeordnet sind.

3. Verbindung nach Anspruch 1 oder 2, **dadurch gekennzeichnet, dass** der obere und der untere Randbereich der plattenartigen Beschlagteile (1, 2) als zueinander komplementäre Teile (13) einer Steckverbindung ausgebildet sind.

4. Verbindung nach einem der Ansprüche 1 bis 3, **dadurch gekennzeichnet, dass** an dem Randbereich (12) des plattenartigen Beschlagteils (1, 2), zu welchem hin die Querschnittsfläche der Öffnung (9) offen ist, ein Blockierteil (14) seitlich an dem plattenartigen Beschlagteils (1, 2) anliegt.

5. Verbindung nach Anspruch 5, **dadurch gekennzeichnet, dass** durch Zusatzteile (15), welche in einem Abstand zu dem Randbereich (12) angeordnet sind, eine Nut zwischen den plattenartigen Beschlagteilen (1, 2) und den Zusatzteilen (15) eingegrenzt ist, in welcher sich die Blockierteile (14) befinden.

6. Verbindung nach Anspruch 5, **dadurch gekennzeichnet, dass** zwei Zusatzteile (15) durch eine Steckverbindung miteinander verbunden sind.

7. Verbindung nach Anspruch 6, **dadurch gekennzeichnet, dass** ein Zusatzteil (15) mit einem der plattenartigen Beschlagteile (2) über eine Steckverbindung verbunden ist.

8. Verbindung nach einem der Ansprüche 5 bis 7, **dadurch gekennzeichnet, dass** ein Zusatzteil (15) an jener der Verbindungsflächen (6, 10) verankert sind, an welcher auch ein plattenartiger Beschlagteil (2) verankert ist.
